# EUROPEAN PATENT SPECIFICATION

(11) **EP 3 863 331 B1**
(45) Date of publication and mention of the grant of the patent: **29.10.2025**
(21) Application number: 20214310.3
(22) Date of filing: 28.08.2013
(51) Int. Cl.: H04W 36/14, H04W 52/14, H04W 88/10, H04W 52/52, H04W 52/34, H04W 52/24, H04W 52/22, H04W 52/36

(54) **METHOD, DEVICE, AND COMPUTER READABLE STORAGE MEDIUM FOR ACQUIRING A SHARABLE POWER**
VERFAHREN, VORRICHTUNG UND COMPUTERLESBARES SPEICHERMEDIUM ZUR ERFASSUNG EINER NUTZBAREN LEISTUNG
PROCÉDÉ, DISPOSITIF ET SUPPORT D'ENREGISTREMENT LISIBLE PAR ORDINATEUR POUR ACQUÉRIR UNE PUISSANCE PARTAGEABLE

(43) Date of publication of application: 11.08.2021
(62) Divisional of application: 13892305.7
(73) Proprietor: HUAWEI TECHNOLOGIES CO., LTD., Shenzhen, Guangdong 518129 (CN)
(72) Inventor: SHI, Xiaoyan, Shenzhen, Guangdong 518129 (CN); ZHANG, Jing, Shenzhen, Guangdong 518129 (CN); ZHANG, Liwen, Shenzhen, Guangdong 518129 (CN)
(74) Representative: Maiwald GmbH

(56) References cited:
- EP-A1- 2 541 998
- WO-A1-2013/086670

## Description

### TECHNICAL FIELD

The present invention relates to the field of communications, and in particular, to a method, device, and communications system for acquiring a shared power.

### BACKGROUND

Dynamic power sharing between radio network standards means that various radio network standards can share a residual power of a certain radio standard network to perform communications, where a value of the residual power dynamically changes, and therefore this is called dynamic power sharing between the radio network standards. For example, a network whose radio standard is GSM (Global System For Mobile Communications, Global System for Mobile Communications) can output residual power of a power amplifier in the network to a network whose radio standard is LTE (Long Term Evolution, Long Term Evolution) or UMTS (Universal Mobile Telecommunications System, Universal Mobile Telecommunications System), so that the LTE or UMTS network uses the residual power of the power amplifier in the GSM, thereby reducing power waste of the power amplifier in the GSM network. EP 2 541 998 A1 describes methods and an apparatuses for power sharing, wherein the method comprises the following steps of: according to a power demand of the communication systems of at least one mode among communication systems of different modes sharing a same power amplifier, determining whether to perform power sharing among communication systems of different modes, when it is determined to perform the power sharing according to the power demands, power sharing is performed among communication systems of different modes WO 2013/086670 A1 describes a method, device and base station for distributing a signal when multiple carriers share multiple power amplifiers, which relate to the technical field of wireless communications.

In the prior art, in a MIMO (Mutiple Input Mutiple Output, multiple-input multiple-output) scenario of a radio network, each cell in a radio standard network includes multiple PAs (Power Amplifier, power amplifier), and a sharable power provided by each PA is a difference value between a configuration power of each PA and an actual transmit power of each signal on each carrier of the PA. Therefore, a value of a sharable power provided by each PA is different. However, a cell using a sharable power only uses the minimum value in multiple values of sharable powers provided by a cell that provides a sharable power. Therefore, a phenomenon of wasting power resources still exists.

### SUMMARY

The invention is defined by the independent claims. Further embodiments are defined by the dependent claims. Embodiments of the present invention provide a method, device, and communications system for acquiring a shared power, which can reduce a waste of power resources.

To achieve the preceding objective, the embodiments of the present invention adopt the following technical solutions:
According to a first aspect, a method for acquiring shared power is provided, including:
acquiring, by a network side device, transmit power of all carriers in a first cell;
adjusting, by the network side device, a carrier with maximum transmit power in unadjusted carriers in all the carriers onto a power amplifier with maximum available power in all power amplifiers of the first cell;
updating, by the network side device, an available power of the power amplifier with the maximum available power;
repeatedly executing, by the network side device, the adjusting and updating steps until adjustments to all the carriers are complete; and
acquiring, by the network side device, a minimum value in values of available powers of all the power amplifiers as a sharable power of the first cell.

With reference to the first aspect, in a first possible implementation manner, the adjusting, by the network side device, a carrier with a maximum transmit power in unadjusted carriers of all the carriers onto a power amplifier with a maximum available power in all power amplifiers of the first cell includes:
sorting, by the network side device in descending order and according to a value of the transmit power, carriers that are in all the carriers and are not adjusted onto the power amplifier;
acquiring, by the network side device, a first power amplifier with a maximum available power; and
adjusting, by the network side device, a first carrier that is in the first place after the sorting onto the first power amplifier.

With reference to the first possible implementation manner, in a second possible implementation manner, the acquiring, by the network side device, a first power amplifier with a maximum available power includes:
calculating, by the network side device, a difference between a configuration power of each power amplifier and the sum of transmit powers of carriers adjusted onto the each power amplifier, so as to obtain the available powers of all the power amplifiers; and
choosing, by the network side device, a power amplifier with a maximum available power from all the power amplifiers as the first power amplifier.

With reference to the first aspect, the first or the second possible implementation manner, in a third possible implementation manner, after the acquiring, by the network side device, a minimum value in values of available powers of all the power amplifiers as a sharable power of the first cell, the method further includes:
acquiring, by the network side device, sharable powers of all cells that are managed by the network side device and use a same standard as the first cell;
acquiring, by the network side device, a preset relationship table, where the preset relationship table is used to record a preset relationship between cells in all the cells, and the preset relationship is a neighbor relationship or an interference relationship; and
determining, by the network side device, actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the third possible implementation manner, in a fourth possible implementation manner, the determining, by the network side device, actual shared powers of all the cells according to the sharable powers of all the cells and the preset relationship table includes:
acquiring, by the network side device, an optional power set of each cell according to a sharable power of each cell in all the cells, where the optional power set of each cell includes at least one optional power, and the at least one optional power is a nonnegative integer less than or equal to the sharable power of each cell;
choosing, by the network side device, one optional power from the optional power set of each cell to form a first set;
if, in the first set, an absolute value of a difference between optional powers corresponding to any two cells which have a preset relationship is less than or equal to the preset threshold, using, by the network side device, the first set as a candidate power set;
repeating, by the network side device, a process of the choosing one optional power from the optional power set of each cell to form a set and acquiring a candidate set until N candidate power sets are acquired, where N is greater than or equal to **1,** and N is a preset number;
choosing, by the network side device, one set from the N candidate power sets as an actual shared power set; and
using, by the network side device, a power in the actual shared power set as an actual shared power of a corresponding cell in all the cells.

With reference to the fourth possible implementation manner, in a fifth possible implementation manner, the choosing, by the network side device, one set from the N candidate power sets as an actual shared power set includes:
acquiring, by the network side device, sums of all optional powers in the candidate power sets; and
if there is one maximum value in the sums of all optional powers in the candidate power sets, choosing, by the network side device, a candidate power set corresponding to the maximum value as the actual shared power set; or
if there are at least two maximum values in the sums of all optional powers in the candidate power sets, acquiring, by the network side device from candidate power sets corresponding to the at least two maximum values, a candidate power set to which a minimum optional power belongs as the actual shared power set.

According to a second aspect, a method for acquiring a shared power is provided, including:
acquiring, by a network side device, sharable powers of all cells that are managed by the network side device and use a first standard;
acquiring, by the network side device, a preset relationship table, where the preset relationship table is used to record a preset relationship between cells in all the cells, and the preset relationship is a neighbor relationship or an interference relationship; and
determining, by the network side device, actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the second aspect, in a first possible implementation manner, the determining, by the network side device, actual shared powers of all the cells according to the sharable powers of all the cells and the preset relationship table includes:
acquiring, by the network side device, an optional power set of each cell according to a sharable power of each cell in all the cells, where the optional power set of each cell includes at least one optional power, and the at least one optional power is a nonnegative integer less than or equal to the sharable power of each cell;
choosing, by the network side device, one optional power from the optional power set of each cell to form a first set;
if, in the first set, an absolute value of a difference between optional powers corresponding to any two cells which have a preset relationship is less than or equal to the preset threshold, using, by the network side device, the first set as a candidate power set;
repeating, by the network side device, a process of the choosing one optional power from the optional power set of each cell to form a set and acquiring a candidate set until N candidate power sets are acquired, where N is greater than or equal to **1,** and N is a preset number;
choosing, by the network side device, one set from the N candidate power sets as an actual shared power set; and
using, by the network side device, a power in the actual shared power set as an actual shared power of a corresponding cell in all the cells.

With reference to the first possible implementation manner, in a second possible implementation manner, the choosing, by the network side device, one set from the N candidate power sets as an actual shared power set includes:
acquiring, by the network side device, sums of all optional powers in the candidate power sets; and
if there is one maximum value in the sums of all optional powers in the candidate power sets, choosing, by the network side device, a candidate power set corresponding to the maximum value as the actual shared power set; or
if there are at least two maximum values in the sums of all optional powers in the candidate power sets, acquiring, by the network side device from candidate power sets corresponding to the at least two maximum values, a candidate power set to which a minimum optional power belongs as the actual shared power set.

According to a third aspect, a network side device is provided, including:
a first acquiring unit, configured to acquire transmit powers of all carriers in a first cell;
an adjusting unit, configured to adjust a carrier with a maximum transmit power in unadjusted carriers in all the carriers onto a power amplifier with a maximum available power in all power amplifiers of the first cell;
an updating unit, configured to update an available power of the power amplifier with a maximum available power; where:
   the adjusting unit and the updating unit are further configured to repeatedly execute the adjusting and updating steps until adjustments to all the carriers are complete; and
   a second acquiring unit, configured to acquire a minimum value in values of available powers of all the power amplifiers as a sharable power of the first cell.

With reference to the third aspect, in a first possible implementation manner, the adjusting unit specifically includes:
a sorting subunit, configured to sort, in descending order and according to a value of the transmit power, carriers that are in all the carriers and are not adjusted onto the power amplifier;
a first acquiring subunit, configured to acquire a first power amplifier with a maximum available power; and
an adjusting subunit, configured to adjust a first carrier that is in the first place after the sorting onto the first power amplifier.

With reference to the first possible implementation manner, in a second possible implementation manner, the first acquiring subunit is specifically configured to:
calculate a difference between a configuration power of power amplifier and the sum of transmit powers of carriers adjusted onto the each power amplifier, so as to obtain the available powers of all the power amplifiers; and
choose a power amplifier with a maximum available power from all the power amplifiers as the first power amplifier.

With reference to the third aspect, or the first or the second possible implementation manner, in a third possible implementation manner, the network side device further includes:
a third acquiring unit, configured to acquire sharable powers of all cells that are managed by the network side device and use a same standard as the first cell;
a fourth acquiring unit, configured to acquire a preset relationship table, where the preset relationship table is used to record a preset relationship between cells in all the cells, and the preset relationship is a neighbor relationship or an interference relationship; and
a determining unit, configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the third possible implementation manner, in a fourth possible implementation manner, the determining unit specifically includes:
a second acquiring subunit, configured to acquire an optional power set of each cell according to a sharable power of each cell in all the cells, where the optional power set of each cell includes at least one optional power, and the at least one optional power is a nonnegative integer less than or equal to the sharable power of each cell;
a combining subunit, configured to choose one optional power from the optional power set of each cell to form a first set;
a processing subunit, configured to: if, in the first set, an absolute value of a difference between optional powers corresponding to any two cells which have a preset relationship is less than or equal to the preset threshold, use the first set as a candidate power set; where:
   the combining subunit and the processing subunit are further configured to repeat a process of the choosing one optional power from the optional power set of each cell to form a set and acquiring a candidate set until N candidate power sets are acquired, where N is greater than or equal to **1,** and N is a preset number;
   a screening subunit, configured to choose one set from the N candidate power sets as an actual shared power set; and
   a third acquiring subunit, configured to use a power in the actual shared power set as an actual shared power of a corresponding cell in all the cells.

With reference to the fourth possible implementation manner, in a fifth possible implementation manner, the screening subunit is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

According to a fourth aspect, a communications system is provided, including:
any network side device described above.

According to a fifth aspect, a network side device is provided, including:
a first acquiring unit, configured to acquire sharable powers of all cells that are managed by the network side device and use a first standard;
a second acquiring unit, configured to acquire a preset relationship table, where the preset relationship table is used to record a preset relationship between cells in all the cells, and the preset relationship is a neighbor relationship or an interference relationship; and
a determining unit, configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the fifth aspect, in a first possible implementation manner, the determining unit specifically includes:
a first acquiring subunit, configured to acquire an optional power set of each cell according to a sharable power of each cell in all the cells, where the optional power set of each cell includes at least one optional power, and the at least one optional power is a nonnegative integer less than or equal to the sharable power of each cell;
a combining subunit, configured to choose one optional power from the optional power set of each cell to form a first set;
a processing subunit, configured to: if, in the first set, an absolute value of a difference between optional powers corresponding to any two cells which have a preset relationship is less than or equal to the preset threshold, use the first set as a candidate power set; where:
   the combining subunit and the processing subunit are further configured to repeat a process of the choosing one optional power from the optional power set of each cell to form a set and acquiring a candidate set until N candidate power sets are acquired, where N is greater than or equal to 1, and N is a preset number;
   a screening subunit, configured to choose one set from the N candidate power sets as an actual shared power set; and
   a second acquiring subunit, configured to use a power in the actual shared power set as an actual shared power of a corresponding cell in all the cells.

With reference to the first possible implementation manner, in a second possible implementation manner, the screening subunit is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

According to a sixth aspect, a communications system is provided, including:
any network side device described above.

According to a seventh aspect, a network side device is provided, including:
a processor, configured to acquire transmit powers of all carriers in a first cell, where:
the processor is further configured to adjust a carrier with a maximum transmit power in unadjusted carriers in all the carriers onto a power amplifier with a maximum available power in all power amplifiers of the first cell;
the processor is further configured to update an available power of the power amplifier with a maximum available power;
the processor is further configured to repeatedly execute the adjusting and updating steps until adjustments to all the carriers are complete; and
the processor is further configured to acquire a minimum value in values of available powers of all the power amplifiers as a sharable power of the first cell.

With reference to the seventh aspect, in a first possible implementation manner, the processor is specifically configured to:
sort, in descending order and according to a value of the transmit power, carriers that are in all the carriers and are not adjusted onto the power amplifier;
acquire a first power amplifier with a maximum available power; and
adjust a first carrier that is in the first place after the sorting onto the first power amplifier.

With reference to the first possible implementation manner, in a second possible implementation manner, the processor is specifically configured to:
calculate a difference between a configuration power of each power amplifier and the sum of transmit powers of carriers adjusted onto the each power amplifier, so as to obtain the available powers of all the power amplifiers; and
choose a power amplifier with a maximum available power from all the power amplifiers as the first power amplifier.

With reference to the seventh aspect, or the first or the second possible implementation manner, in a third possible implementation manner, the processor is further specifically configured to:
acquire sharable powers of all cells that are managed by the network side device and use a same standard as the first cell;
acquire a preset relationship table, where the preset relationship table is used to record a preset relationship between cells in all the cells, and the preset relationship is a neighbor relationship or an interference relationship; and
determine actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the third possible implementation manner, in a fourth possible implementation manner, the processor is specifically configured to:
acquire an optional power set of each cell according to a sharable power of each cell in all the cells, where the optional power set of each cell includes at least one optional power, and the at least one optional power is a nonnegative integer less than or equal to the sharable power of each cell;
choose one optional power from the optional power set of each cell to form a first set;
if, in the first set, an absolute value of a difference between optional powers corresponding to any two cells which have a preset relationship is less than or equal to the preset threshold, use the first set as a candidate power set;
repeat a process of the choosing one optional power from the optional power set of each cell to form a set and acquiring a candidate set until N candidate power sets are acquired, where N is greater than or equal to **1,** and N is a preset number;
choose one set from the N candidate power sets as an actual shared power set; and
use a power in the actual shared power set as an actual shared power of a corresponding cell in all the cells.

With reference to the fourth possible implementation manner, in a fifth possible implementation manner, the processor is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

According to an eighth aspect, a communications system is provided, including:
any network side device described above.

According to a ninth aspect, a network side device is provided, including:
a processor, configured to acquire sharable powers of all cells that are managed by the network side device and use a first standard, where:
the processor is further configured to acquire a preset relationship table, where the preset relationship table is used to record a preset relationship between cells in all the cells, and the preset relationship is a neighbor relationship or an interference relationship; and
the processor is further configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

With reference to the ninth aspect, in a first possible implementation manner, the processor is specifically configured to:
acquire an optional power set of each cell according to a sharable power of each cell in all the cells, where the optional power set of each cell includes at least one optional power, and the at least one optional power is a nonnegative integer less than or equal to the sharable power of each cell;
choose one optional power from the optional power set of each cell to form a first set;
if, in the first set, an absolute value of a difference between optional powers corresponding to any two cells which have a preset relationship is less than or equal to the preset threshold, use the first set as a candidate power set;
repeat a process of the choosing one optional power from the optional power set of each cell to form a set and acquiring a candidate set until N candidate power sets are acquired, where N is greater than or equal to **1,** and N is a preset number;
choose one set from the N candidate power sets as an actual shared power set; and
use a power in the actual shared power set as an actual shared power of a corresponding cell in all the cells.

With reference to the first possible implementation manner, in a second possible implementation manner, the processor is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

According to a tenth aspect, the present invention provides a communications system, including:
any network side device described above.

The embodiments of the present invention provide a method, device, and communications system for acquiring a shared power, where the method for acquiring a shared power includes: acquiring, by a network side device, transmit powers of all carriers in a first cell; adjusting, by the network side device, a carrier with a maximum transmit power in unadjusted carriers in all the carriers onto a power amplifier with a maximum available power in all power amplifiers of the first cell; updating, by the network side device, an available power of the power amplifier with a maximum available power; repeatedly executing, by the network side device, the adjusting and updating steps until adjustments to all the carriers are complete; and acquiring, by the network side device, a minimum value in values of available powers of all the power amplifiers as a sharable power of the first cell. In this way, a carrier with a maximum transmit power in unadjusted carriers in all carriers is adjusted onto a power amplifier with a maximum available power in all power amplifiers of a first cell, so that available powers of all the power amplifiers rise; and a minimum value in values of the available powers of all the power amplifiers is acquired as a sharable power of the first cell, that is, the sharable power of the first cell is an available power after power rising. Therefore, the sharable power of the first cell is greater than a sharable power adopted in the prior art, thereby increasing a utilization rate of power resources and reducing a waste of power resources.

### BRIEF DESCRIPTION OF DRAWINGS

To describe the technical solutions in the embodiments of the present invention or in the prior art more clearly, the following briefly introduces the accompanying drawings required for describing the embodiments or the prior art.

The accompanying drawings in the following description show merely some embodiments of the present invention.
FIG. 1 is a flowchart of a method for acquiring a shared power according to an embodiment of the present invention;
FIG. 2 is a flowchart of another method for acquiring a shared power according to an embodiment of the present invention;
FIG. 3 is a schematic flowchart of a carrier adjustment method according to an embodiment of the present invention;
FIG. 4 is a flowchart of still another method for acquiring a shared power according to an embodiment of the present invention;
FIG. 5 is a schematic structural diagram of a network side device according to an embodiment of the present invention;
FIG. 6 is a schematic structural diagram of an adjusting unit of a network side device according to an embodiment of the present invention;
FIG. 7 is a schematic structural diagram of another network side device according to an embodiment of the present invention;
FIG. 8 is a schematic structural diagram of a determining unit of a network side device according to an embodiment of the present invention;
FIG. 9 is a schematic structural diagram of still another network side device according to an embodiment of the present invention;
FIG. 10 is a schematic structural diagram of another determining unit of a network side device according to an embodiment of the present invention;
FIG. 11 is a schematic structural diagram of yet another network side device according to an embodiment of the present invention; and
FIG. 12 is a schematic structural diagram of yet another network side device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

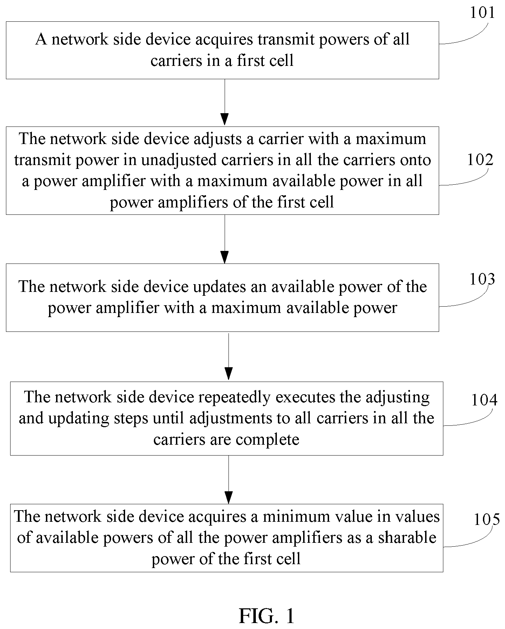

An embodiment of the present invention provides a method for acquiring a shared power, which is applied to a MIMO (Multiple-Input Multiple-Out-put, multiple-input multiple-output) scenario of a radio network. As shown in FIG. 1, the method includes:
Step 101: A network side device acquires transmit powers of all carriers in a first cell.

The transmit powers may be transmit powers that are obtained by calculation and required for transmitting signals, or may be expected powers required for transmitting signals.

Step 102: The network side device adjusts a carrier with a maximum transmit power in unadjusted carriers in all the carriers onto a power amplifier with a maximum available power in all power amplifiers of the first cell.

Specifically, the network side device may sort, in descending order and according to a value of the transmit power, carriers that are in all the carriers and are not adjusted onto the power amplifier; then acquire a first power amplifier with a maximum available power, for example, calculate a difference between a configuration power of each power amplifier and the sum of transmit powers of carriers adjusted onto the each power amplifier, so as to obtain available powers of all the power amplifiers, and choose a power amplifier with a maximum available power from all the power amplifiers as the first power amplifier; and finally adjust a first carrier that is in the first place after the sorting onto the first power amplifier.

Step 103: The network side device updates an available power of the power amplifier with a maximum available power.

Step 104: The network side device repeatedly executes the adjusting and updating steps until adjustments to all the carriers are complete.

Step 105: The network side device acquires a minimum value in values of available powers of all the power amplifiers as a sharable power of the first cell.

In this way, a carrier with a maximum transmit power in unadjusted carriers in all carriers is adjusted onto a power amplifier with a maximum available power in all power amplifiers of a first cell, so that available powers of all the power amplifiers rise; and a minimum value in values of the available powers of all the power amplifiers is acquired as a sharable power of the first cell, that is, the sharable power of the first cell is an available power after power rising. Therefore, the sharable power of the first cell is greater than a sharable power adopted in the prior art, thereby increasing a utilization rate of power resources and reducing a waste of power resources.

Further, after step 105, the method includes: acquiring, by the network side device, sharable powers of all cells that are managed by the network side device and use a same standard as the first cell; acquiring, by the network side device, a preset relationship table, where the preset relationship table is used to record a preset relationship between cells in all the cells, and the preset relationship is a neighbor relationship or an interference relationship; and determining, by the network side device, actual shared powers of all the cells according to the sharable powers of all the cells and the preset relationship table, so that in all the cells, an absolute value of a difference between actual shared powers of any two cells which have a preset relationship is less than or equal to a preset threshold.

Specifically, the determining, by the network side device, actual shared powers of all the cells according to the sharable powers of all the cells and the preset relationship table includes:
acquiring, by the network side device, an optional power set of each cell according to a sharable power of each cell in all the cells, where the optional power set of each cell includes at least one optional power, and the at least one optional power is a nonnegative integer less than or equal to the sharable power of each cell; choosing one optional power from the optional power set of each cell to form a first set; if, in the first set, an absolute value of a difference between optional powers corresponding to any two cells which have a preset relationship is less than or equal to the preset threshold, using, by the network side device, the first set as a candidate power set; repeating a process of the choosing one optional power from the optional power set of each cell to form a set and acquiring a candidate set until N candidate power sets are acquired, where N is greater than or equal to 1, and N is a preset number; choosing one set from the N candidate power sets as an actual shared power set; and using a power in the actual shared power set as an actual shared power of a corresponding cell in all the cells.

When the network side device chooses one set from the N candidate power sets as an actual shared power set, the network side device may acquire sums of all optional powers in the candidate power sets; and if there is one maximum value in the sums of all optional powers in the candidate power sets, the network side device chooses a candidate power set corresponding to the maximum value as the actual shared power set; or if there are at least two maximum values in the sums of all optional powers in the candidate power sets, the network side device acquires, from candidate power sets corresponding to the at least two maximum values, a candidate power set to which a minimum optional power belongs as the actual shared power set.

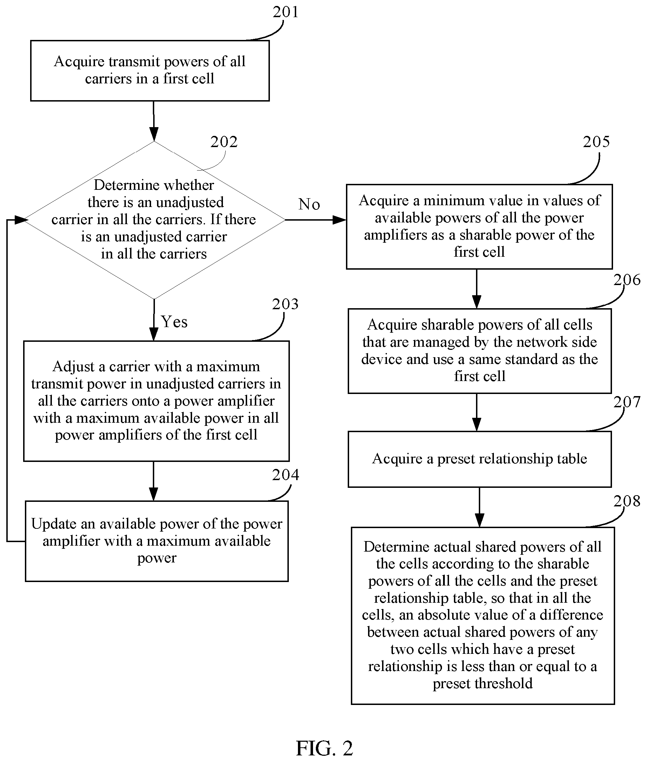

An embodiment of the present invention provides a method for acquiring a shared power. A specific process is shown as FIG. 2, including:
Step 201: A network side device acquires transmit powers of all carriers in a first cell. Execute step 202.

For example, it is assumed that GSM cell A is capable of providing a shared power for an LTE cell or a UMTS cell, cell A has two PAs, which are PA 1 and PA 2, and transmit powers of all carriers on each PA is listed in Table 1. It should be noted that the unit of all the powers in Table 1 is watt (w).

**Table 1**

| **Transmit power of all carriers on PA 1** | **Transmit power of all carriers on PA 2** |
|---|---|
| 19 | 20 |
| 14 | 18 |
| 5 | 10 |
| | 8 |

As shown in Table 1, for ease of description, it is assumed that on PA 1, a carrier whose transmit power is 19 w is carrier 1, a carrier whose transmit power is 14 w is carrier 2, and a carrier whose transmit power is 5 w is carrier 3, that is, there are three unadjusted carriers when PA 1 is initiated; and it is assumed that on PA 2, a carrier whose transmit power is 20 W is carrier 4, a carrier whose transmit power is 18 w is carrier 5, a carrier whose transmit power is 10 w is carrier 6, and a carrier whose transmit power is 8 w is carrier 7.

Step 202: The network side device determines whether there is an unadjusted carrier in all the carriers. If there is an unadjusted carrier in all the carriers, execute step 203; and if there is no unadjusted carrier in all the carriers, execute step 205.

Step 203: The network side device adjusts a carrier with a maximum transmit power in unadjusted carriers in all the carriers onto a power amplifier with a maximum available power in all power amplifiers of the first cell.

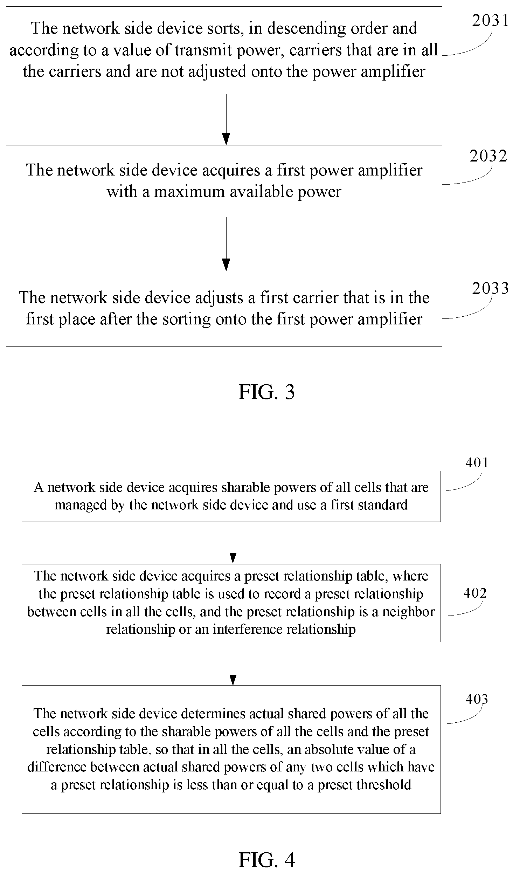

Specifically, a process that the network side device adjusts a carrier with a maximum transmit power in unadjusted carriers in all the carriers onto a power amplifier with a maximum available power in all the power amplifiers of the first cell can be shown as FIG. 3, including:
Step 2031: The network side device sorts, in descending order and according to a value of the transmit power, carriers that are in all the carriers and not adjusted onto the power amplifier.

For example, for multiple carriers on the two PAs of cell A, the carriers that are in all the carriers and are not adjusted onto the power amplifier are sorted in descending order and according to the transmit powers. Assuming that the carriers that are not adjusted onto the power amplifier currently are shown in Table 1 in step 201, transmit powers of the carriers after the sorting are shown in Table 2. The transmit power of carrier 4 on PA 2 is the greatest, which is 20 W, and the transmit power of carrier 1 on PA 1 is in the second place, which is 19 W. For an order of other carriers, reference may be made to Table 2, and no detailed descriptions are provided in the embodiment.

**Table 2**

| **Sorting order** | **Transmit power of carrier** | **Carrier number** |
|---|---|---|
| 1 | 20 | 4 |
| 2 | 19 | 1 |
| 3 | 18 | 5 |
| 4 | 14 | 2 |
| 5 | 10 | 6 |
| 6 | 8 | 7 |
| 7 | 5 | 3 |

Step 2032: The network side device acquires a first power amplifier with a maximum available power.

The network side device may calculate a difference between a configuration power of each power amplifier and the sum of transmit powers of carriers adjusted onto the each power amplifier, so as to obtain the available powers of all the power amplifiers, and choose a power amplifier with a maximum available power from all the power amplifiers as the first power amplifier.

For example, assuming that a quantity of carriers currently adjusted onto the two PAs is 0, the sum, which is obtained by calculation, of transmit powers of carriers on PA 1 of cell A is 0, and the sum, which is obtained by calculation, of transmit powers of carriers on PA 2 of cell A is 0. It is assumed that a configuration power of PA 1 is 50 W, and a configuration power of PA 2 is 80 W. An available power 50 W is obtained by calculating a difference between the configuration power of PA 1 and the sum of transmit powers of carriers adjusted onto PA 1, and an available power 80 W is obtained by calculating a difference between the configuration power of PA 2 and the sum of transmit powers of carriers adjusted onto PA 2. Finally, the power amplifier corresponding to the available power 80 W, that is, PA 2, is acquired as the first power amplifier. It should be noted that in the embodiment of the present invention, a configuration power of each PA is the sum of configuration powers of all carriers on the PA. For example, assuming that a configuration power of carrier 1 on PA 1 is 20 W, a configuration power of carrier 2 is 15 W, and a configuration power of carrier 3 is 15 W, the configuration power of PA 1 is 20 + 15 + 15 = 50 W. In an actual application, a transmit power of each carrier is less than or equal to a configuration power of the carrier. In particular, the configuration power is also referred to as a rated power.

Step 2033: The network side device adjusts a first carrier that is in the first place after the sorting onto the first power amplifier.

For example, when PA 2 serves as the first power amplifier, and transmit powers of all the carriers after the sorting are shown as Table 2, carrier 4, which is in the first place after the sorting and corresponds to the transmit power 20 W, can be adjusted onto PA 2 as the first carrier. In particular, when available powers of multiple PAs are equal, the first carrier can be adjusted onto a PA that has a minimum quantity of adjustable carriers currently. For example, assuming that available powers of PA 3 and PA 4 are equal, an initial quantity of carriers on PA 3 is 6, an initial quantity of carriers on PA 4 is 5, a quantity of carriers on PA 3 that are not adjusted currently is 3, and a quantity of carriers on PA 4 that are not adjusted is 4, the first carrier is adjusted onto PA 3.

Step 204: The network side device updates the available power of the power amplifier with a maximum available power. Execute step 202.

The network side device may calculate a difference between a configuration power of each power amplifier and the sum of transmit powers of carriers adjusted onto the each power amplifier, so as to obtain the available powers of all the power amplifiers. In the embodiment, the power amplifier with a maximum available power is the first power amplifier PA 2. The carrier adjusted onto PA 2 is carrier 4, and the configuration power of PA 2 is 80 W, and therefore the sum, which is obtained by calculation, of the transmit powers of the carriers on PA 2 of cell A is 20 W, and an available power 60 W is obtained by calculating a difference between the configuration power of PA 2 and the sum of transmit powers of the carriers adjusted onto PA 2.

It should be noted that PA 1 and PA 2 are still used as an example and the following steps are obtained by repeating steps 202 to 204:
The network side device determines that there are unadjusted carriers 1, 2, 3, 5, 6, and 7 on PA 1 and PA 2. Carriers that are in all the carriers and are not adjusted onto the power amplifiers are sorted in descending order and according to the transmit powers, and the transmit powers of all the carriers after the sorting are shown as Table 3. The transmit power of carrier 1 on PA 1 is the greatest, which is 19 W. For an order of other carriers, reference may be made to Table 3, and no detailed descriptions are provided in the embodiment.

**Table 3**

| **Sorting order** | **Transmit power of carrier** | **Carrier number** |
|---|---|---|
| 1 | 19 | 1 |
| 2 | 18 | 5 |
| 3 | 14 | 2 |
| 4 | 10 | 6 |
| 5 | 8 | 7 |
| 6 | 5 | 3 |

Currently, the available power of PA 1 is 50 W, the available power of PA 2 is 60 W, and PA 1 is acquired as the first power amplifier. Therefore, carrier 1, which is in the first place after the sorting and corresponds to the transmit power 19 W, is the first carrier adjusted onto PA 1. The available power of PA 1 is updated, that is, an available power 41 W is obtained by calculating a difference between the configuration power of PA 1 and the sum of transmit powers of carriers adjusted onto PA 1.

Steps 202 to 204 are repeated until there is no unadjusted carrier on PA 1 and PA 2. The final obtained available power of PA 1 is 17 W, and the available power of PA 2 is 19 W.

According to the foregoing method, an order of carrier 1 to carrier 7 after readjustment may be shown as Table 4. Carriers adjusted onto PA 1 are carrier 1, carrier 2, and carrier 7, and carriers adjusted onto PA 2 are carrier 4, carrier 5, carrier 6, and carrier 3.

**Table 4**

| **Number of carrier on PA 1 after adjustment** | **Transmit power of carrier on PA 1 after adjustment** | **Number of carrier on PA 2 after adjustment** | **Transmit power of carrier on PA 2 after adjustment** |
|---|---|---|---|
| 5 | 18 | 4 | 20 |
| 6 | 10 | 1 | 19 |
| 3 | 5 | 2 | 14 |
| | | 7 | 8 |

Step 205: The network side device acquires a minimum value in values of available powers of all the power amplifiers as a sharable power of the first cell. Execute step 206.

When there is no unadjusted carrier in all the carriers, the final obtained available power of PA 1 is 17 W, and the available power of PA 2 is 19 W. 17 W is less than 19 W, and therefore 17 W can be used as the sharable power of the first cell.

As shown in Table 5, Table 5 records a comparison result between transmit powers of carriers on each PA and a sharable power before and after the adjustment.

**Table 5**

| **Before adjustment** | | **After adjustment** | |
|---|---|---|---|
| **Transmit power of carrier on PA 1 before adjustment** | **Transmit power of carrier on PA 2 before adjustment** | **Transmit power of carrier on PA 1 after adjustment** | **Transmit power of carrier on PA 2 after adjustment** |
| 19 | 20 | 18 | 20 |
| 14 | 18 | 10 | 19 |
| 5 | 10 | 5 | 14 |
| | 8 | | 8 |
| Available power of PA 112 W | Available power of PA2 24 W | Available power of PA 1 17W | Available power of PA2 19 W |

It can be seen from Table 5, in the prior art, 12 W is used as the sharable power of the first cell, and in the embodiment of the present invention, 19 W is used as the sharable power of the first cell. Therefore, an available power of each power amplifier rises by using the method for acquiring a sharable power of the first cell. Correspondingly, the sharable power of the first cell is the available power after power rising. Therefore, the sharable power of the first cell is greater than a sharable power adopted in the prior art, thereby increasing a utilization rate of power resources and reducing a waste of power resources.

Step 206: The network side device acquires sharable powers of all cells that are managed by the network side device and use a same standard as the first cell. Execute step 207.

For a cell that is managed by the network side device and uses a same standard as the first cell, when multiple PAs exist in the cell, steps 201 to 205 can be used to acquire a sharable power of the cell.

Step 207: The network side device acquires a preset relationship table, where the preset relationship table is used to record a preset relationship between cells in all the cells, and the preset relationship is a neighbor relationship or an interference relationship. Execute step 208.

It should be noted that the network side device may be a newly set device, or may be an existing device in a GSM network, a UMTS network, or an LTE network. For example, the network side device may be a BSC (Base Station Controller, base station controller) in GSM, or may be an ICIC (Inter-Cell Interference Coordination, inter-cell interference coordination) module in LTE.

When the network side device is a BSC in GSM, each GSM cell may transfer a sharable power of the cell to the BSC, and the BSC directly acquires a locally stored preset relationship table, where the preset relationship table records a neighbor relationship between cells in all the cells managed by the BSC. The BSC conducts, within a preset period of time, measurement for each cell in the unit of cells according to the preset relationship table. The BSC measures shared power duration of all neighboring cells of the cell and shared power duration of the cell. If the shared power duration of the cell and that of all the neighboring cells of the cell are greater than a preset time threshold of the preset period of time, for example, 90% of duration of the preset period of time, it is determined that the cell and all the neighboring cells of the cell enter a steady sharing state. For example, a length of the preset period of time can be set to 15 minutes. Assuming that cell A and neighboring cells of cell A are in a sharing state within more than 15 x 90% = 13.5 minutes from the time when the measurement starts to the time when the measurement ends, it is considered that cell A and the neighboring cells of cell A enter the steady sharing state. Then the BSC instructs a base station in which cell A locates to enter a power sharing state.

When the network side device is an ICIC module in an LTE system, because the ICIC module is configured to eliminate interference between cells in the LTE system, an interference relationship between the cells is also stored. Therefore, the ICIC module is capable of directly acquiring a locally stored preset relationship table, where the preset relationship table records an interference relationship between cells in all the cells managed by the ICIC module.

Step 208: The network side device determines actual shared powers of all the cells according to the sharable powers of all the cells and the preset relationship table, so that in all the cells, an absolute value of a difference between actual shared powers of any two cells which have a preset relationship is less than or equal to a preset threshold.

The network side device acquires an optional power set of each cell according to a sharable power of each cell in all the cells, where the optional power set of each cell includes at least one optional power, and the at least one optional power is a nonnegative integer less than or equal to the sharable power of each cell. For example, if a sharable power of the first cell is 19 W, an optional power set of the first cell includes all nonnegative integers from 0 to 19. The network side device chooses one optional power from the optional power set of each cell to form a first set. If, in the first set, an absolute value of a difference between optional powers corresponding to any two cells which have a preset relationship is less than or equal to the preset threshold, the network side device uses the first set as a candidate power set; repeats a process of the choosing one optional power from the optional power set of each cell to form a set and acquiring a candidate set until N candidate power sets are acquired, where N is greater than or equal to 1, and N is a preset number; chooses one set from the N candidate power sets as an actual shared power set; and uses a power in the actual shared power set as an actual shared power of a corresponding cell in all the cells. In an actual application, N may be a fixed numeric value, or may be a numeric value which has a preset relationship with a sharable power value of each cell in all the cells. For example, N may be a quantity of sets which are in all sets obtained by choosing one optional power from the optional power set of each cell and meet a condition that an absolute value of a difference between optional powers of any two cells which have a preset relationship is less than or equal to the preset threshold.

For example, assuming that all the cells include the first cell, a second cell, and a third cell, the sharable power of the first cell is 19 W, a sharable power of the second cell is 14 W, a sharable power of the third cell is 10 W, and the preset threshold is 5 w, the optional power set of each cell is shown as Table 6.

**Table 6**

| **Cell identifier** | **Optional power set** |
|---|---|
| First cell | 0, 1, 2, 3, 4, 5, 6, 7, 8, 9, 10, 11, 12, 13, 14, 15, 16, 17, 18, 19 |
| Second cell | 0, 1, 2, 3, 4, 5, 6, 7, 8, 9, 10, 11, 12, 13, 14 |
| Third cell | 0, 1, 2, 3, 4, 5, 6, 7, 8, 9, 10 |

One optional power is chosen from the optional power set of the first cell, the second cell, and the third cell separately to form a first set; if, in the first set, an absolute value of a difference between optional powers corresponding to any two cells which have a preset relationship is less than or equal to the preset threshold, the network side device uses the first set as a candidate power set; and finally N candidate power sets are obtained. For example, it is assumed that the N candidate power sets may include: (0, 0, 0), (1, 1, 1), (2, 2, 2), ..., (10, 10, 10), and (15, 14, 10).

When the network side device chooses one set from the N candidate power sets as an actual shared power set, the network side device may acquire sums of all optional powers in the candidate power sets; and if there is one maximum value in the sums of all optional powers in the candidate power sets, the network side device chooses a candidate power set corresponding to the maximum value as the actual shared power set; or if there are at least two maximum values in the sums of all optional powers in the candidate power sets, the network side device acquires, from candidate power sets corresponding to the at least two maximum values, a candidate power set to which a minimum optional power belongs as the actual shared power set. The foregoing first cell, second cell, and third cell are still used as an example. 0 is obtained by calculating the sum of all the optional powers in (0, 0, 0), 3 is obtained by calculating the sum of all the optional powers in (1, 1, 1), 6 is obtained by calculating the sum of all the optional powers in (2, 2, 2), ..., 30 is obtained by calculating the sum of all the optional powers in (10, 10, 10), and 39 is obtained by calculating the sum of all the optional powers in (15, 14, 10). Because the maximum value 39 exists in the sums of all the optional powers in the candidate power sets, the network side device chooses the candidate power set (15, 14, 10) corresponding to the maximum value 39 as the actual shared power set. Therefore, the actual shared power set is (15, 14, 10), the actual shared power of the first cell is 15 W, the actual shared power of the second cell is 14 W, and the actual shared power of the third cell is 10 W.

Generally, in cells that are managed by a network side device and use a same standard, rising in an actual shared power of a cell may reduce working quality of a cell which has a neighbor relationship or an interference relationship with the cell. In the embodiment of the present invention, the foregoing method for acquiring a shared power is used, so that in all the cells, an absolute value of a difference between actual shared powers of any two cells which have a preset relationship is less than or equal to a preset threshold, thereby reducing interference between cells which have a preset relationship and improving power sharing efficiency. Further, if there is one maximum value in sums of all optional powers in candidate power sets, the network side device chooses a candidate power set corresponding to the maximum value as an actual shared power set; or if there are at least two maximum values in sums of all optional powers in candidate power sets, the network side device acquires, from candidate power sets corresponding to the at least two maximum values, a candidate power set to which a minimum optional power belongs as an actual shared power set. In this way, actual shared powers of all the cells that use the same standard steadily rise, and interference between the cells is reduced.

According to the method for acquiring a shared power provided by the embodiment of the present invention, a carrier with a maximum transmit power in unadjusted carriers in all carriers is adjusted onto a power amplifier with a maximum available power in all power amplifiers of a first cell, so that available powers of all the power amplifiers rise; and a minimum value in values of the available powers of all the power amplifiers is acquired as a sharable power of the first cell, that is, the sharable power of the first cell is an available power after power rising. Therefore, the sharable power of the first cell is greater than a sharable power adopted in the prior art, thereby increasing a utilization rate of power resources and reducing a waste of power resources.

An embodiment of the present invention provides a method for acquiring a shared power. As shown in FIG. 4, the method includes:
Step 401: A network side device acquires sharable powers of all cells that are managed by the network side device and use a first standard.
Step 402: The network side device acquires a preset relationship table, where the preset relationship table is used to record a preset relationship between cells in all the cells, and the preset relationship is a neighbor relationship or an interference relationship.

It should be noted that the network side device may be a newly set device, or may be an existing device in a GSM network, a UMTS network, or an LTE network. For example, the network side device may be a BSC (Base Station Controller, base station controller) in GSM, or may be an ICIC (Inter-Cell Interference Coordination, inter-cell interference coordination) module in LTE.

When the network side device is a BSC in GSM, each GSM cell may transfer a sharable power of the cell to the BSC, and the BSC directly acquires a locally stored preset relationship table, where the preset relationship table records a neighbor relationship between cells in all the cells managed by the BSC. The BSC conducts, within a preset period of time, measurement for each cell in the unit of cells according to the preset relationship table. The BSC measures shared power duration of all neighboring cells of the cell and shared power duration of the cell. If the shared power duration of the cell and that of all the neighboring cells of the cell are greater than a preset time threshold of the preset period of time, for example, 90% of duration of the preset period of time, it is determined that the cell and all the neighboring cells of the cell enter a steady sharing state. For example, a length of the preset period of time can be set to 15 minutes. Assuming that cell A and neighboring cells of cell A are in a sharing state within more than 15 x 90% = 13.5 minutes from the time when the measurement starts to the time when the measurement ends, it is considered that cell A and the neighboring cells of cell A enter the steady sharing state. Then the BSC instructs a base station in which cell A locates to enter a power sharing state.

When the network side device is an ICIC module in an LTE system, because the ICIC module is configured to eliminate interference between cells in the LTE system, an interference relationship between the cells is also stored. Therefore, the ICIC module is capable of directly acquiring a locally stored preset relationship table, where the preset relationship table records an interference relationship between cells in all the cells managed by the ICIC module.

Step 403: The network side device determines actual shared powers of all the cells according to the sharable powers of all the cells and the preset relationship table, so that in all the cells, an absolute value of a difference between actual shared powers of any two cells which have a preset relationship is less than or equal to a preset threshold.

In this way, the network side device determines actual shared powers of all the cells according to the sharable powers of all the cells and the preset relationship table, so that in all the cells, an absolute value of a difference between actual shared powers of any two cells which have a preset relationship is less than or equal to a preset threshold, and therefore in all the cells, a difference between actual shared powers of any two cells which have a preset relationship is decreased, thereby reducing interference between cells which have a preset relationship, and improving power sharing efficiency.

Specifically, step 403 includes: acquiring, by the network side device, an optional power set of each cell according to a sharable power of each cell in all the cells, where the optional power set of each cell includes at least one optional power, and the at least one optional power is a nonnegative integer less than or equal to the sharable power of each cell. For example, if a sharable power of a first cell is 19 W, an optional power set of the first cell includes all nonnegative integers from 0 to 19. The network side device chooses one optional power from the optional power set of each cell to form a first set. If, in the first set, an absolute value of a difference between optional powers corresponding to any two cells which have a preset relationship is less than or equal to the preset threshold, the network side device uses the first set as a candidate power set; repeats a process of the choosing one optional power from the optional power set of each cell to form a set and acquiring a candidate set until N candidate power sets are acquired, where N is greater than or equal to 1, and N is a preset number; chooses one set from the N candidate power sets as an actual shared power set; and uses a power in the actual shared power set as an actual shared power of a corresponding cell in all the cells.

For example, assuming that all the cells include the first cell, a second cell, and a third cell, the sharable power of the first cell is 19 W, a sharable power of the second cell is 14 W, a sharable power of the third cell is 10 W, and the preset threshold is 5 w, the optional power set of each cell is shown as Table 7.

**Table 7**

| **Cell identifier** | **Optional power set** |
|---|---|
| First cell | 0, 1, 2, 3, 4, 5, 6, 7, 8, 9, 10, 11, 12, 13, 14, 15, 16, 17, 18, 19 |
| Second cell | 0, 1, 2, 3, 4, 5, 6, 7, 8, 9, 10, 11, 12, 13, 14 |
| Third cell | 0, 1, 2, 3, 4, 5, 6, 7, 8, 9, 10 |

One optional power is chosen from the optional power set of the first cell, the second cell, and the third cell separately to form a first set; if, in the first set, an absolute value of a difference between optional powers corresponding to any two cells which have a preset relationship is less than or equal to the preset threshold, the network side device uses the first set as a candidate power set; and finally N candidate power sets are obtained. For example, it is assumed that the N candidate power sets may include: (0, 0, 0), (1, 1, 1), (2, 2, 2), ..., (10, 10, 10), and (15, 14, 10).

When the network side device chooses one set from the N candidate power sets as an actual shared power set, the network side device may acquire sums of all optional powers in the candidate power sets; and if there is one maximum value in the sums of all optional powers in the candidate power sets, the network side device chooses a candidate power set corresponding to the maximum value as the actual shared power set; or if there are at least two maximum values in the sums of all optional powers in the candidate power sets, the network side device acquires, from candidate power sets corresponding to the at least two maximum values, a candidate power set to which a minimum optional power belongs as the actual shared power set. The foregoing first cell, second cell, and third cell are still used as an example. 0 is obtained by calculating the sum of all the optional powers in (0, 0, 0), 3 is obtained by calculating the sum of all the optional powers in (1, 1, 1), 6 is obtained by calculating the sum of all the optional powers in (2, 2, 2), ..., 30 is obtained by calculating the sum of all the optional powers in (10, 10, 10), and 39 is obtained by calculating the sum of all the optional powers in (15, 14, 10). Because the maximum value 39 exists in the sums of all the optional powers in the candidate power sets, the network side device chooses the candidate power set (15, 14, 10) corresponding to the maximum value 39 as the actual shared power set. Therefore, the actual shared power set is (15, 14, 10), the actual shared power of the first cell is 15 W, the actual shared power of the second cell is 14 W, and the actual shared power of the third cell is 10 W.

Generally, in cells that are managed by a network side device and use a same standard, rising in a time shared power of a cell may reduce working quality of a cell which has a neighbor relationship or an interference relationship with the cell. In the embodiment of the present invention, the foregoing power sharing method is used, so that in all the cells, an absolute value of a difference between actual shared powers of any two cells which have a preset relationship is less than or equal to a preset threshold, thereby reducing interference between cells which have a preset relationship and improving power sharing efficiency. Further, if there is one maximum value in sums of all optional powers in candidate power sets, the network side device chooses a candidate power set corresponding to the maximum value as an actual shared power set; or if there are at least two maximum values in sums of all optional powers in candidate power sets, the network side device acquires, from candidate power sets corresponding to the at least two maximum values, a candidate power set to which a minimum optional power belongs as an actual shared power set. In this way, actual shared powers of all the cells that use the same standard steadily rise, and interference between the cells is reduced.

It should be noted that in the method for acquiring a shared power provided by the embodiment of the present invention, sequence of steps may be adjusted appropriately, and a step may also be added or removed based on circumstances. Any variation readily figured out by a person skilled in the art within the technical scope of the present invention shall fall within the protection scope of the present invention, and therefore details are not described herein again.

According to a method for acquiring power sharing provided by the embodiment of the present invention, a network side device determines actual shared powers of all the cells according to sharable powers of all the cells and a preset relationship table, so that in all the cells, an absolute value of a difference between actual shared powers of any two cells which have a preset relationship is less than or equal to a preset threshold, and therefore in all the cells, a difference between actual shared powers of any two cells which have a preset relationship is decreased, thereby reducing interference between cells which have a preset relationship, and improving power sharing efficiency.

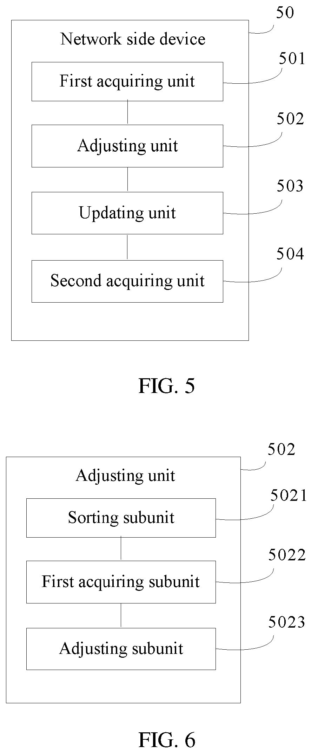

An embodiment of the present invention provides a network side device 50. As shown in FIG. 5, the network side device includes:
a first acquiring unit 501, configured to acquire transmit powers of all carriers in a first cell;
an adjusting unit 502, configured to adjust a carrier with a maximum transmit power in unadjusted carriers in all the carriers onto a power amplifier with a maximum available power in all power amplifiers of the first cell;
an updating unit 503, configured to update an available power of the power amplifier with a maximum available power; where:
   the adjusting unit 502 and the updating unit 503 are further configured to repeatedly execute the adjusting and updating steps until adjustments to all the carriers are complete; and
   a second acquiring unit 504, configured to acquire a minimum value in values of available powers of all the power amplifiers as a sharable power of the first cell.

In this way, the adjusting unit adjusts a carrier with a maximum transmit power in unadjusted carriers in all carriers onto a power amplifier with a maximum available power in all power amplifiers of a first cell, so that available powers of all the power amplifiers rise; and the second acquiring unit acquires a minimum value in values of the available powers of all the power amplifiers as a sharable power of the first cell, that is, the sharable power of the first cell is an available power after power rising. Therefore, the sharable power of the first cell is greater than a sharable power adopted in the prior art, thereby increasing a utilization rate of power resources and reducing a waste of power resources.

Further, as shown in FIG. 6, the adjusting unit 502 specifically includes:
a sorting subunit 5021, configured to sort, in descending order and according to a value of the transmit power, carriers that are in all the carriers and are not adjusted onto the power amplifier;
a first acquiring subunit 5022, configured to acquire a first power amplifier with a maximum available power; and
an adjusting subunit 5023, configured to adjust a first carrier that is in the first place after the sorting onto the first power amplifier.

The first acquiring subunit 5022 is specifically configured to:
calculate a difference between a configuration power of each power amplifier and the sum of transmit powers of carriers adjusted onto the each power amplifier, so as to obtain the available powers of all the power amplifiers; and choose a power amplifier with a maximum available power from all the power amplifiers as the first power amplifier.

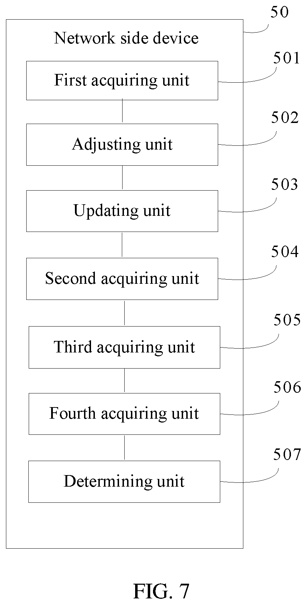

As shown in FIG. 7, the network side device 50 further includes:
a third acquiring unit 505, configured to acquire sharable powers of all cells that are managed by the network side device and use a same standard as the first cell;
a fourth acquiring unit 506, configured to acquire a preset relationship table, where the preset relationship table is used to record a preset relationship between cells in all the cells, and the preset relationship is a neighbor relationship or an interference relationship; and
a determining unit 507, configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

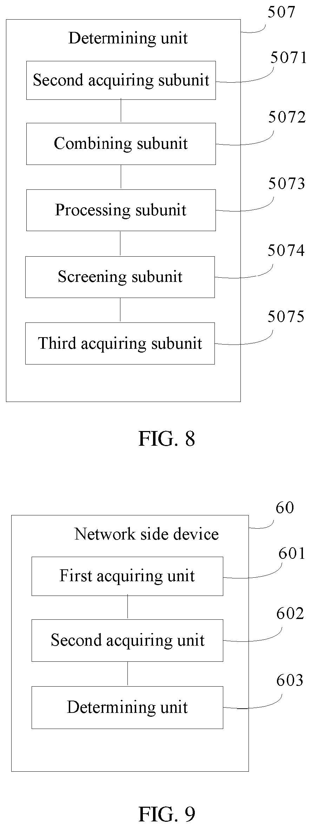

As shown in FIG. 8, the determining unit 507 specifically includes:
a second acquiring subunit 5071, configured to acquire an optional power set of each cell according to a sharable power of each cell in all the cells, where the optional power set of each cell includes at least one optional power, and the at least one optional power is a nonnegative integer less than or equal to the sharable power of each cell;
a combining subunit 5072, configured to choose one optional power from the optional power set of each cell to form a first set;
a processing subunit 5073, configured to: if, in the first set, an absolute value of a difference between optional powers corresponding to any two cells which have a preset relationship is less than or equal to the preset threshold, use the first set as a candidate power set; where:
   the combining subunit 5072 and the processing subunit 5073 are further configured to repeat a process of the choosing one optional power from the optional power set of each cell to form a set and acquiring a candidate set until N candidate power sets are acquired, where N is greater than or equal to 1, and N is a preset number;
   a screening subunit 5074, configured to choose one set from the N candidate power sets as an actual shared power set; and
   a third acquiring subunit 5075, configured to use a power in the actual shared power set as an actual shared power of a corresponding cell in all the cells.

The screening subunit 5074 is specifically configured to:
acquire sums of all optional powers in the candidate power sets; and if there is one maximum value in the sums of all optional powers in the candidate power sets, choose a candidate power set corresponding to the maximum value as the actual shared power set; or if there are at least two maximum values in the sums of all optional powers in the candidate power sets, acquire, from candidate power sets corresponding to the at least two maximum values, a candidate power set to which a minimum optional power belongs as the actual shared power set.

An embodiment of the present invention provides a communications system, including:
the network side device described in any foregoing embodiment.

The network side device is configured to: acquire transmit powers of all carriers in a first cell; adjust a carrier with a maximum transmit power in unadjusted carriers in all the carriers onto a power amplifier with a maximum available power in all power amplifiers of the first cell; update an available power of the power amplifier with a maximum available power; repeatedly execute the adjusting and updating steps until adjustments to all the carriers are complete; and acquire a minimum value in values of available powers of all the power amplifiers as a sharable power of the first cell.

An embodiment of the present invention provides a network side device 60. As shown in FIG. 9, the network side device includes:
a first acquiring unit 601, configured to acquire sharable powers of all cells that are managed by the network side device and use a first standard;
a second acquiring unit 602, configured to acquire a preset relationship table, where the preset relationship table is used to record a preset relationship between cells in all the cells, and the preset relationship is a neighbor relationship or an interference relationship; and
a determining unit 603, configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

In this way, the determining unit determines actual shared powers of all the cells according to sharable powers of all the cells and a preset relationship table, so that in all the cells, an absolute value of a difference between actual shared powers of any two cells which have a preset relationship is less than or equal to a preset threshold, and therefore in all the cells, a difference between actual shared powers of any two cells which have a preset relationship is decreased, thereby reducing interference between cells which have a preset relationship and improving power sharing efficiency.

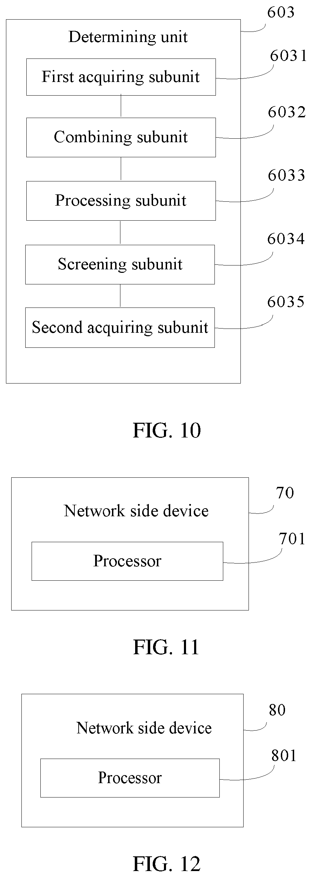

As shown in FIG. 10, the determining unit 603 specifically includes:
a first acquiring subunit 6031, configured to acquire an optional power set of each cell according to a sharable power of each cell in all the cells, where the optional power set of each cell includes at least one optional power, and the at least one optional power is a nonnegative integer less than or equal to the sharable power of each cell;
a combining subunit 6032, configured to choose one optional power from the optional power set of each cell to form a first set;
a processing subunit 6033, configured to: if, in the first set, an absolute value of a difference between optional powers corresponding to any two cells which have a preset relationship is less than or equal to the preset threshold, use the first set as a candidate power set; where:
   the combining subunit 6032 and the processing subunit 6033 are further configured to repeat a process of the choosing one optional power from the optional power set of each cell to form a set and acquiring a candidate set until N candidate power sets are acquired, where N is greater than or equal to 1, and N is a preset number;
   a screening subunit 6034, configured to choose one set from the N candidate power sets as an actual shared power set; and
   a second acquiring subunit 6035, configured to use a power in the actual shared power set as an actual shared power of a corresponding cell in all the cells.

The screening subunit 6034 is specifically configured to:
acquire sums of all optional powers in the candidate power sets; and if there is one maximum value in the sums of all optional powers in the candidate power sets, choose a candidate power set corresponding to the maximum value as the actual shared power set; or if there are at least two maximum values in the sums of all optional powers in the candidate power sets, acquire, from candidate power sets corresponding to the at least two maximum values, a candidate power set to which a minimum optional power belongs as the actual shared power set.

An embodiment of the present invention provides a communications system, including:
the network side device described in any foregoing embodiment.

The network side device is configured to acquire sharable powers of all cells that are managed by the network side device and use a same standard as a first cell; acquire a preset relationship table, where the preset relationship table is used to record a preset relationship between cells in all the cells, and the preset relationship is a neighbor relationship or an interference relationship; and determine actual shared powers of all the cells according to the sharable powers of all the cells and the preset relationship table, so that in all the cells, an absolute value of a difference between actual shared powers of any two cells which have a preset relationship is less than or equal to a preset threshold.

An embodiment of the present invention provides a network side device 70. As shown in FIG. 11, the network side device includes:
a processor 701, configured to acquire transmit powers of all carriers in a first cell.

The processor 701 is further configured to adjust a carrier with a maximum transmit power in unadjusted carriers in all the carriers onto a power amplifier with a maximum available power in all power amplifiers of the first cell.

The processor 701 is further configured to update an available power of the power amplifier with a maximum available power.

The processor 701 is further configured to repeatedly execute the adjusting and updating steps until adjustments to all the carriers are complete.

The processor 701 is further configured to acquire a minimum value in values of available powers of all the power amplifiers as a sharable power of the first cell.

In this way, the processor adjusts a carrier with a maximum transmit power in unadjusted carriers in all carriers onto a power amplifier with a maximum available power in all power amplifiers of a first cell, so that available powers of all the power amplifiers rise; and a minimum value in values of the available powers of all the power amplifiers is acquired as a sharable power of the first cell, that is, the sharable power of the first cell is an available power after power rising. Therefore, the sharable power of the first cell is greater than a sharable power adopted in the prior art, thereby increasing a utilization rate of power resources and reducing a waste of power resources.

The processor 701 is specifically configured to:
sort, in descending order and according to a value of the transmit power, carriers that are in all the carriers and are not adjusted onto the power amplifier;
acquire a first power amplifier with a maximum available power; and
adjust a first carrier that is in the first place after the sorting onto the first power amplifier.

The processor 701 is specifically configured to:
calculate a difference between a configuration power of each power amplifier and the sum of transmit powers of carriers adjusted onto the each power amplifier, so as to obtain the available powers of all the power amplifiers; and
choose a power amplifier with a maximum available power from all the power amplifiers as the first power amplifier.

The processor 701 is further specifically configured to:
acquire sharable powers of all cells that are managed by the network side device and use a same standard as the first cell;
acquire a preset relationship table, where the preset relationship table is used to record a preset relationship between cells in all the cells, and the preset relationship is a neighbor relationship or an interference relationship; and
determine actual shared powers of all the cells according to the sharable powers of all the cells and the preset relationship table, so that in all the cells, an absolute value of a difference between actual shared powers of any two cells which have a preset relationship is less than or equal to a preset threshold.

The processor 701 is specifically configured to:
acquire an optional power set of each cell according to a sharable power of each cell in all the cells, where the optional power set of each cell includes at least one optional power, and the at least one optional power is a nonnegative integer less than or equal to the sharable power of each cell;
choose one optional power from the optional power set of each cell to form a first set;
if, in the first set, an absolute value of a difference between optional powers corresponding to any two cells which have a preset relationship is less than or equal to the preset threshold, use the first set as a candidate power set;
repeat a process of the choosing one optional power from the optional power set of each cell to form a set and acquiring a candidate set until N candidate power sets are acquired, where N is greater than or equal to 1, and N is a preset number;
choose one set from the N candidate power sets as an actual shared power set; and
use a power in the actual shared power set as an actual shared power of a corresponding cell in all the cells.

The processor 701 is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

An embodiment of the present invention provides a communications system, including:
the network side device described in any foregoing embodiment.

The network side device is configured to: acquire transmit powers of all carriers in a first cell; adjust a carrier with a maximum transmit power in unadjusted carriers in all the carriers onto a power amplifier with a maximum available power in all power amplifiers of the first cell; update an available power of the power amplifier with a maximum available power; repeatedly execute the adjusting and updating steps until adjustments to all the carriers are complete; and acquire a minimum value in values of available powers of all the power amplifiers as a sharable power of the first cell.

An embodiment of the present invention provides a network side device 80. As shown in FIG. 12, the network side device includes:
a processor 801, configured to acquire sharable powers of all cells that are managed by the network side device and use a first standard.

The processor 801 is further configured to acquire a preset relationship table, where the preset relationship table is used to record a preset relationship between cells in all the cells, and the preset relationship is a neighbor relationship or an interference relationship.

In this way, the processor determines actual shared powers of all the cells according to the sharable powers of all the cells and a preset relationship table, so that in all the cells, an absolute value of a difference between actual shared powers of any two cells which have a preset relationship is less than or equal to a preset threshold, and therefore in all the cells, a difference between actual shared powers of any two cells which have a preset relationship is decreased, thereby reducing interference between cells which have a preset relationship and improving power sharing efficiency.

The processor 801 is further configured to determine actual shared powers of all the cells according to the sharable powers of all the cells and the preset relationship table, so that in all the cells, an absolute value of a difference between actual shared powers of any two cells which have a preset relationship is less than or equal to a preset threshold.

The processor 801 is specifically configured to:
acquire an optional power set of each cell according to a sharable power of each cell in all the cells, where the optional power set of each cell includes at least one optional power, and the at least one optional power is a nonnegative integer less than or equal to the sharable power of each cell;
choose one optional power from the optional power set of each cell to form a first set;
if, in the first set, an absolute value of a difference between optional powers corresponding to any two cells which have a preset relationship is less than or equal to the preset threshold, use the first set as a candidate power set;
repeat a process of the choosing one optional power from the optional power set of each cell to form a set and acquiring a candidate set until N candidate power sets are acquired, where N is greater than or equal to 1, and N is a preset number;
choose one set from the N candidate power sets as an actual shared power set; and
use a power in the actual shared power set as an actual shared power of a corresponding cell in all the cells.

The processor 801 is specifically configured to:
acquire sums of all optional powers in the candidate power sets; and
if there is one maximum value in the sums of all optional powers in the candidate power sets, choose a candidate power set corresponding to the maximum value as the actual shared power set; or
if there are at least two maximum values in the sums of all optional powers in the candidate power sets, acquire, from candidate power sets corresponding to the at least two maximum values, a candidate power set to which a minimum optional power belongs as the actual shared power set.

An embodiment of the present invention provides a communications system, including:
the network side device provided by any embodiment described above.

The network side device is configured to acquire sharable powers of all cells that are managed by the network side device and use a same standard as a first cell; acquire a preset relationship table, where the preset relationship table is used to record a preset relationship between cells in all the cells, and the preset relationship is a neighbor relationship or an interference relationship; and determine actual shared powers of all the cells according to the sharable powers of all the cells and the preset relationship table, so that in all the cells, an absolute value of a difference between actual shared powers of any two cells which have a preset relationship is less than or equal to a preset threshold.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

In the several embodiments provided in the present application, it should be understood that the disclosed system, device, and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware plus a software functional unit.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

## Claims

1. A method for acquiring a sharable power in a cell, **characterized by** comprising:
acquiring (101), by a network side device, transmit powers of all carriers in the cell;
allocating, by the network side device a carrier, which has not been allocated yet to any power amplifier of the cell, and whose transmit power is the maximum among transmit powers of all carriers in the cell, to a power amplifier, among all power amplifiers of the cell, having a maximum available power;
updating (103), by the network side device, an available power of the power amplifier;
repeatedly executing (104), by the network side device, the allocating and updating steps until allocating of all carriers in the cell is complete; and
acquiring (105), by the network side device, a minimum value among values of available powers of all power amplifiers of the cell as the sharable power of the cell.

2. The method according to claim 1, wherein the available power being obtained by calculating a difference between a maximum available power of the power amplifier and a sum of transmit powers of all carriers allocated onto the power amplifier.

3. The method according to claim 1 or 2, wherein the allocating step comprises:
sorting (2031), by the network side device in descending order and according to a value of the transmit power of each carrier, all the carriers that are not allocated yet onto any power amplifier of the cell;
acquiring (2032), by the network side device, among all power amplifiers of the cell, a first power amplifier having a maximum available power; and
allocating (2033), by the network side device, a first carrier that is in the first place after the sorting onto the acquired first power amplifier.

4. A network side device (70, 80) for acquiring a sharable power in a cell, **characterized by** comprising:
a processor (701, 801), configured to acquire transmit powers of all carriers in the cell; allocate a carrier which has not been allocated yet to any power amplifier of the cell, and whose transmit power is the maximum among said transmit powers of all carriers in the cell, to a power amplifier having a maximum available power among all power amplifiers of the cell; and update an available power of the power amplifier;
the processor is further configured to repeatedly execute the allocating and updating steps until allocating of all carriers in the cell is complete; and
the processor is further configured to acquire a minimum value among values of available powers of all power amplifiers of the cell as the sharable power of the cell.

5. The network side device according to claim 4, wherein the available power being obtained by calculating a difference between a maximum available power of the power amplifier and a sum of transmit powers of all carriers allocated onto the power amplifier.

6. The network side device according to claim 4 or 5, wherein the processor is further configured to:
sort all the carriers that are not allocated yet onto any power amplifier of the cell in descending order and according to a value of the transmit power of each carrier;
acquire a first power amplifier having a maximum available power among all power amplifiers of the cell; and
allocate a first carrier that is in the first place after the sorting onto the acquired first power amplifier.

7. A computer readable storage medium having a program recorded thereon; wherein the program makes a computer (701, 801) execute the method of any one of claims 1 to 2.

## Patentansprüche

1. Verfahren zum Beschaffen einer gemeinsam benutzbaren Leistung in einer Zelle, **dadurch gekennzeichnet, dass** es Folgendes umfasst:
Beschaffen (101) von Sendeleistungen aller Träger in der Zelle durch eine netzseitige Vorrichtung;
Vergeben eines Trägers durch die netzseitige Vorrichtung, der noch an keinen Leistungsverstärker der Zelle vergeben wurde und dessen Sendeleistung unter Sendeleistungen aller Träger in der Zelle maximal ist, an einen Leistungsverstärker mit einer maximal verfügbaren Leistung unter allen Leistungsverstärkern der Zelle;
Aktualisieren (103) einer verfügbaren Leistung des Leistungsverstärkers durch die netzseitige Vorrichtung;
wiederholtes Ausführen (104) der Schritte des Vergebens und Aktualisierens durch die netzseitige Vorrichtung, bis Vergabe aller Träger in der Zelle abgeschlossen ist; und
Beschaffen (105) eines Mindestwerts unter Werten verfügbarer Leistungen aller Leistungsverstärker der Zelle durch die netzseitige Vorrichtung als die gemeinsam benutzbare Leistung der Zelle.

2. Verfahren nach Anspruch 1, wobei die verfügbare Leistung durch Berechnen einer Differenz zwischen einer maximal verfügbaren Leistung des Leistungsverstärkers und einer Summe von Sendeleistungen aller auf den Leistungsverstärker vergebenen Träger erhalten wird.

3. Verfahren nach Anspruch 1 oder 2, wobei der Schritt des Vergebens Folgendes umfasst:
Sortieren (2031) aller Träger, die noch auf keinen Leistungsverstärker der Zelle vergeben sind, durch die netzseitige Vorrichtung in absteigender Reihenfolge und gemäß einem Wert der Sendeleistung jedes Trägers;
Beschaffen (2032) eines ersten Leistungsverstärkers mit einer maximal verfügbaren Leistung unter allen Leistungsverstärkern der Zelle durch die netzseitige Vorrichtung; und
Vergeben (2033) eines ersten Trägers, der nach dem Sortieren an der ersten Stelle steht, auf den beschafften ersten Leistungsverstärker durch die netzseitige Vorrichtung.

4. Netzseitige Vorrichtung (70, 80) zum Beschaffen einer gemeinsam benutzbaren Leistung in einer Zelle, **dadurch gekennzeichnet, dass** sie Folgendes umfasst:
einen Prozessor (701, 801), ausgelegt zum Beschaffen von Sendeleistungen aller Träger in der Zelle; Vergeben eines Trägers, der noch an keinen Leistungsverstärker der Zelle vergeben wurde und dessen Sendeleistung unter den Sendeleistungen aller Träger in der Zelle maximal ist, an einen Leistungsverstärker mit einer maximal verfügbaren Leistung unter allen Leistungsverstärkern der Zelle; und Aktualisieren einer verfügbaren Leistung des Leistungsverstärkers;
wobei der Prozessor ferner ausgelegt ist zum wiederholten Ausführen der Schritte des Vergebens und Aktualisierens, bis Vergabe aller Träger in der Zelle abgeschlossen ist; und
der Prozessor ferner ausgelegt ist zum Beschaffen eines Mindestwerts unter Werten verfügbarer Leistungen aller Leistungsverstärker der Zelle als die gemeinsam benutzbare Leistung der Zelle.

5. Netzseitige Vorrichtung nach Anspruch 4, wobei die verfügbare Leistung durch Berechnen einer Differenz zwischen einer maximal verfügbaren Leistung des Leistungsverstärkers und einer Summe von Sendeleistungen aller auf den Leistungsverstärker vergebenen Träger erhalten wird.

6. Netzseitige Vorrichtung nach Anspruch 4 oder 5, wobei der Prozessor ferner ausgelegt ist zum
Sortieren aller Träger, die noch auf keinen Leistungsverstärker der Zelle vergeben sind, in absteigender Reihenfolge und gemäß einem Wert der Sendeleistung jedes Trägers;
Beschaffen eines ersten Leistungsverstärkers mit einer maximal verfügbaren Leistung unter allen Leistungsverstärkern der Zelle; und
Vergeben eines ersten Trägers, der nach dem Sortieren an der ersten Stelle steht, auf den beschafften ersten Leistungsverstärker.

7. Computerlesbares Speicherungsmedium, auf dem ein Programm aufgezeichnet ist, wobei das Programm bewirkt, dass ein Computer (701, 801) das Verfahren nach einem der Ansprüche 1 bis 2 ausführt.

## Revendications

1. Procédé permettant d'acquérir une puissance partageable dans une cellule, **caractérisé par le fait qu'**il comprend :
l'acquisition (101), par un dispositif côté réseau, de puissances d'émission de toutes les porteuses dans la cellule ;
l'attribution, par le dispositif côté réseau, d'une porteuse qui n'a encore été attribuée à aucun amplificateur de puissance de la cellule et dont la puissance d'émission est la plus élevée parmi les puissances d'émission de toutes les porteuses de la cellule, à un amplificateur de puissance, parmi tous les amplificateurs de puissance de la cellule, ayant une puissance maximale disponible ;
la mise à jour (103), par le dispositif côté réseau, d'une puissance disponible de l'amplificateur de puissance ;
l'exécution répétée (104), par le dispositif côté réseau, des étapes d'attribution et de mise à jour jusqu'à ce que l'attribution de toutes les porteuses dans la cellule soit terminée ; et
l'acquisition (105), par le dispositif côté réseau, d'une valeur minimale parmi les valeurs des puissances disponibles de tous les amplificateurs de puissance de la cellule en tant que puissance partageable de la cellule.

2. Procédé selon la revendication 1, dans lequel la puissance disponible est obtenue en calculant une différence entre la puissance maximale disponible de l'amplificateur de puissance et une somme de puissances d'émission de toutes les porteuses attribuées à l'amplificateur de puissance.

3. Procédé selon la revendication 1 ou 2, dans lequel l'étape d'attribution comprend :
le tri (2031), par le dispositif côté réseau, dans l'ordre décroissant et en fonction d'une valeur de la puissance d'émission de chaque porteuse, de toutes les porteuses qui ne sont pas encore attribuées à un amplificateur de puissance de la cellule ;
l'acquisition (2032), par le dispositif côté réseau, parmi tous les amplificateurs de puissance de la cellule, d'un premier amplificateur de puissance ayant une puissance maximale disponible ; et
l'attribution (2033), par le dispositif côté réseau, d'une première porteuse qui se trouve en première position après le tri au premier amplificateur de puissance acquis.

4. Dispositif côté réseau (70, 80) permettant l'acquisition d'une puissance partageable dans une cellule, **caractérisé par le fait qu'**il comprend :
un processeur (701, 801), configuré pour acquérir des puissances d'émission de toutes les porteuses dans la cellule ; attribuer une porteuse qui n'a pas encore été attribuée à un amplificateur de puissance de la cellule et dont la puissance d'émission est la plus élevée parmi lesdites puissances d'émission de toutes les porteuses de la cellule, à un amplificateur de puissance ayant une puissance disponible maximale parmi tous les amplificateurs de puissance de la cellule ; et mettre à jour la puissance disponible de l'amplificateur de puissance ;
le processeur est en outre configuré pour exécuter de manière répétée les étapes d'attribution et de mise à jour jusqu'à ce que l'attribution de toutes les porteuses de la cellule soit terminée ; et
le processeur est en outre configuré pour acquérir une valeur minimale parmi des valeurs de puissances disponibles de tous les amplificateurs de puissance de la cellule en tant que puissance partageable de la cellule.

5. Dispositif côté réseau selon la revendication 4, dans lequel la puissance disponible est obtenue en calculant la différence entre une puissance maximale disponible de l'amplificateur de puissance et une somme de puissances d'émission de toutes les porteuses attribuées à l'amplificateur de puissance.

6. Dispositif côté réseau selon la revendication 4 ou 5, dans lequel le processeur est en outre configuré pour :
trier toutes les porteuses qui n'ont pas encore été attribuées à un amplificateur de puissance de la cellule dans l'ordre décroissant et en fonction de la valeur de la puissance d'émission de chaque porteuse ;
acquérir un premier amplificateur de puissance ayant une puissance disponible maximale parmi tous les amplificateurs de puissance de la cellule ; et
attribuer une première porteuse qui se trouve en première position après le tri à un premier amplificateur de puissance acquis.

7. Support de stockage lisible par ordinateur sur lequel est enregistré un programme ; dans lequel le programme amène un ordinateur (701, 801) à exécuter le procédé selon l'une quelconque des revendications 1 à 2.
